# EUROPEAN PATENT APPLICATION

(11) **EP 4 513 846 A1**
(43) Date of publication of application: **26.02.2025**
(21) Application number: 24184779.7
(22) Date of filing: 26.06.2024
(51) Int. Cl.: H04L 43/0811, G06F 1/26, H04L 43/10

(54) **SMART POWER CONNECTOR**

(30) Priority: 28.06.2023 US 202363523674 P
(71) Applicant: Patil, Nitin Dinkar, Pune, Maharashtra 411017 (IN)
(72) Inventor: Patil, Nitin Dinkar, Pune, Maharashtra 411017 (IN)
(74) Representative: Monteiro Alves, Inês

(57) **Abstract**

The invention refers to a power connector strip (102) to check internet connectivity checking and rebooting, a system (100) and a computer-implemented method.

The power connector strip (102) is connected to a power source (101) via a power cord (108), comprises power sockets (103), LAN ports (104), and it's programmable. The system (100) comprises the power connector strip (102) and an on-site computer (107) for a user (121), a first communication link (110), networking devices (105) plugged into the power sockets (103) via power connections (109), which are connected via a wired connection (111). The system further comprises a public server (106) and a first internet link (112), and a client organization (113) connected to a networking device (105) via a second internet link (114). The system further comprises a cloud infrastructure (124) comprising an API service (116) connected via a third internet link (115), a database (117) connected via a second communication link (119), a web application server (118) connected to the database (117) and an end user computer (120) connected to the web application server (118) via a server link (123).

## Description

### TECHNICAL DOMAIN

The subject matter of the present application is comprised within the field of power connectors, systems and methods of checking Internet connectivity.

### BACKGROUND

Typically, networking devices lose their connection to the Internet when their cache becomes full. In order to resume the connection to the Internet, devices need to be rebooted manually. The cache of a device normally can store a very big amount of data. This will slow down Internet access significantly and eventually lead to a disconnection from it.

### PRIOR ART

Current power connectors, or power sockets, have no means of detecting that devices electrically connected thereto lost their connection to the Internet. Or they are able to detect the connection lost but not analyzing data related thereto.

US Patent No.: US 10,838473 B2 published on 30th January, 2020, by International Business Machines Corporation, Armonk, NY (US), discloses a method for protecting a computer system performed by a smart connector. The smart connector tests an Internet connection provided by an Internet hub. The connector reboots the Internet hub if the testing detects a problem in the Internet connection.

Therefore, today there is no technical solution that solves the technical problem of power sockets that require a manual rebooting of the devices connected thereto whenever the Internet connection is lost and analyzing relevant data related thereto.

### SUMMARY OF THE INVENTION

The present invention refers to a power connector strip with at least two power sockets. Networking devices like Network Access Points (NAP) and Internet Service Providers (ISP), etc. are plugged to the power sockets. It has 2 Ethernet LAN ports to access the internet. It has a power pin which takes power input form a power feed like an Uninterrupted Power Supply (UPS). The power connector strip is connected to a web application server which is used for configuration and sending device related data for data analysis. The present invention also relates to a computer-implemented method for checking for internet connectivity using the same network in which networking devices (NAP and ISP) are connected, by means of the power connector strip. In case of failure, the power connector strip power cycles the sockets based on logical criteria set in the power connector strip.

The users of the system according to the invention have the capability to connect to the power connector strip and configure various settings for the power cycle of sockets and data send mechanism to a cloud infrastructure. All the ping failures and power cycles are captured on the cloud so that an end user can see the same on a web application. The data analytics algorithms will forecast the trend of ping failures and power cycles and it would be visible on the web application to the end user.

In a first aspect, the present invention refers to a power connector strip.

In a second aspect, the present invention refers to a system for checking internet connectivity comprising the power connector strip according to the first aspect.

In a third aspect, the present invention refers to a computer/implemented method implemented for checking internet connectivity by the system according to the second aspect.

In a fourth aspect, the present invention refers to a computer program comprising instructions which, when the program is executed by a computer, causes the computer to carry out the computer-implemented method of the third aspect.

In a fifth aspect, the present invention refers to a computer-readable medium comprising instructions which, when executed by a computer, cause the computer to carry out the computer-implemented method of the third aspect.

### SOLUTION TO THE PROBLEM

The technological solution presented by the power connector strip according to the present invention comprises smart power sockets which work on a predefined business logic set in its firmware. Said smart power sockets reboot the NAP and ISP devices if the internet connectivity check fails. The power connector strip of the invention helps rebooting the network devices without any human intervention, through a connection to a web application server which is used for configuration and sending device related data for data analysis.

Advantageously, the power connector strip of the invention and the computer-implemented method related thereto allow Internet service providers to maintain their customers connected to the internet without interruptions and without the need of a human intervention, providing a high level of reliability of customer internet service.

### ADVANTAGEOUS EFFECTS OF THE INVENTION

Concerning the present invention's characteristics, the following advantages are listed:
- checking for internet connectivity of network setup without any human intervention;
- power cycling the devices based on certain logic that saves manual efforts;
- installation is simple enough so that anyone can do it without any technical expertise;
- configuration of power reset criteria and data push end points of the cloud is available with simple steps via a web page;
- a web application is available to see ping failures and power cycles happen previously/ historically;
- a web application also present a view for forecasting the trend of ping failure and power cycles;
- the power sockets are Universal Power Sockets intended to allow various regional network devices to be connected;
- maximum power is up to 2500 W;
- optimized power cabling circuit to make sure avoiding loose connection while handling the power connector strip;
- CE certified devices;
- detachable power connector cord provided so that the power connector strip can be connected to a UPS power source irrespective of its geographical location;
- the power connector strip has a provision to configure multiple public servers to send a ping just in case if one public server is down it can check with another public server;
- the power connector strip has a provision to make any public server as primary and secondary select from multiple public server to send a ping command to check for internet connectivity;
- the power connector strip has a provision to configure X number of ping failures to the primary public server before switching to secondary public server for ping;
- there is a provision in the power connector strip to configure the time duration between the power cycles and the power connector strip will check this value before making a power cycle to the sockets.

### BRIEF DESCRIPTION OF THE FIGURES

With the purpose of providing an understanding of the principles according to the embodiments of the present invention, reference will be made to the embodiments illustrated in the figures and to the terminology used to describe them. In any case, it should be understood that there is no intention of limiting the scope of the present invention to the contents of the figures. Any subsequent alterations or modifications of the inventive characteristics illustrated herein, as well as any additional applications of the principles and embodiments of the invention illustrated, which would normally occur to a person skilled in the art having the knowledge of this specification, are considered as being within the scope of the claimed invention.
**Figure 1** - represents a schematic diagram of an embodiment of the system according to the present invention; and
**Figure 2** - represents a flow chart of an embodiment of the computer-implemented method according to the present invention.

### DESCRIPTION OF THE EMBODIMENTS

The present invention refers to a power connector strip configured to check for internet connectivity using the same network in which networking devices (NAP and ISP) are connected. The invention refers also to a system and a computer-implemented method for checking internet connectivity.

The power connector strip is plugged into a raw power feed like a UPS. Networking devices are plugged into the power sockets of the power connector strip. Networking devices are "ON" as soon as plugged into the power sockets of the power connector strip. The power connector strip has 2 LAN ports to access the internet, communicate with networking devices and to plug with computer. The power connector strip contains smart firmware in a programmable control unit which is intended to check for network connectivity and power cycle the sockets based on certain logic. Such logic is programmable in the programmable control unit as described below in relation to the method of the invention.

The power connector strip comprises a fuse that can prevent damage to SPC in case of input power surge.

The power connector strip LAN ports have a dynamic host configuration protocol (DHCP) client capability and start pinging a public server every time interval to check for internet connectivity. The time interval is configurable by connecting SPC to computer.

The power connector strip power cycles the sockets if X number of consecutive pings goes fail. The X number is configurable by connecting the power connector strip to a computer.

There is a provision in the power connector strip, that is, a programmable control unit, to configure the time duration between the power cycles and the power connector strip will check this value before making a power cycle to the sockets.

The power connector strip maintains a record of failure of pings to send the data to the cloud. The power connector strip maintains a record of the timings when it power cycle the sockets to send the data to cloud. All the ping failures and power cycles are captured on the cloud so that an end user can see the same on the web application.

The data analytics algorithms will forecast the trend of ping failures and power cycles and it would be visible on the web application to the end user.

The power connector strip is also configured to provide diagnosis data, for which, in certain embodiments, the power connector strip comprises an internal thermometer for its internal temperature measurement, for example, a thermocouple-based thermometer. Also, the diagnosis data can US Patent No.: US 10,838473 B2 published on 30th January, 2020, by International Business Machines Corporation, Armonk, NY (US),

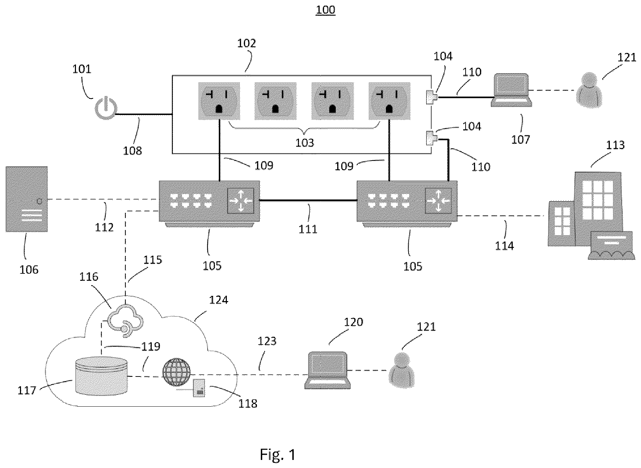

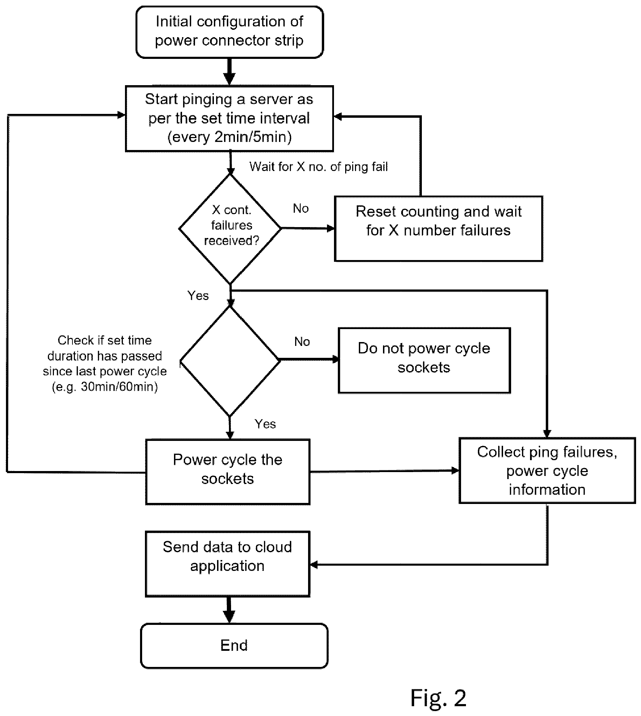

The present invention will be described with respect to the accompanying FIG 1. in which like numbered elements represent like parts. The present invention is directed to a power connector strip and system (see Fig. 1) of checking the internet connectivity and a computer-implemented method of monitoring the status condition of one or more functions associated with the networking and routing devices and communicating the status (see Fig. 2).

With reference to the figures, FIG. 1 is a schematic diagram 100 illustrating the model of a Smart Power Connector (SPC) herein also referred as a power connector strip 102 for use in household or business facility where internet connectivity devices are established to provide network connectivity.

The SPC or power connector strip 102 has at least 2, for example, 4 identical power sockets 103, a power chord 108 and is configured to operate on the local access network (LAN) for its operation of the facility in which it is installed. The SPC will use a dynamic host configuration protocol (DHCP) to acquire and configure network settings and to communicate with other peripheral devices. For example, the power connector strip 102 captures the IP (Internet Protocol address) after the successful DHCP connection and sends it to the cloud infrastructure 124 , this IP is then visible on the Web. This information can be used while troubleshooting the connected devices in the network by an IT team, for example.

The SPC or power connector strip 102 draws raw power straight from the power source like a UPS 101 or an electric board 101. The maximum power out capacity is 2500 W.

Turning to the networking devices 105, they are those which provide capabilities like routing, traffic management and connection to the global network for internet. Networking devices 105 are a combination of multiple devices such as Network Access Points (NAP) and Internet Service Provider (ISP) and other kinds of devices. For simplicity purposes, the multiple devices NAP and ISP are considered as one under networking devices 105. Networking devices 105 are plugged into the power sockets 103 for power using power connection 109. Networking devices 105 are connected to each other using a hard-wired connection 111.

Often the one or more networking devices 105 lose the access to internet to a second computational unit, for example, a public server 106. One of the primary reasons for this is that the networking devices 105 cache becomes full. In such case the networking devices 105 needs to be power cycle to again start accessing the internet.

Networking devices 105 is/are connected to a public server 106 using a first internet link 112. Using a first communication link 110, the SPC or power connector strip 102 checks the internet connectivity for networking devices 105.

This section will explain the internal working of SPC or power connector strip 102 and its purpose. A device like SPC or power connector strip 102 becomes useful to continuously check whether the networking devices 105 has/have access to internet. The system operator 121 has the capability to configure time interval to ping the second computational unit, for example, a public server 106. If X number of consecutive pings goes fail, SPC or power connector strip 102 power cycles the sockets 103. The X number is configurable by connecting SPC 102 to on-site computer or first computational unit 107. Every SPC or power connector strip 102 will have a unique identifier for identification and will use UTC for time stamping.

There is a provision in SPC 102, particularly the programmable control unit, which comprises an internal real time clock (RTC) for the time counting, to configure the time duration between two power cycles and SPC 102 will check this value before making a power cycle to the sockets 103. If the set time duration does not pass, SPC 102 will not power cycle the sockets 103. If the set time duration passes, SPC or power connector strip 102 will power cycle the sockets 103, which will eventually reboot the networking devices 105.

One of the other LAN ports 104 is connected to a first computational unit or an on-site computer 107 by a communication link 110. A user, for example, a system operator 121 will use the on-site computer 107 for initial configuration of SPC 102 and its related tasks. The SPC or power connector strip 102 also comprises an internal memory or data storage unit, for example, an EEPROM. The memory storage unit can be a memory card, like an SD card for when there is no internet connection available to send the data to the cloud server. The memory card (SD Card) can be formatted by sending a command through a web application from the cloud. Once the internet connection is back, the power connector strip 102 reads data from the memory card and sends it to the cloud server. This helps prevent loss of data even if the internet connection is not on. This helps to have all the data for analytical purposes.

One key configuration the system operator 121 will perform is to provide the configuration of time interval to send ping command to public server 106. This gives the organizations the flexibility to set the time interval for ping command; (for example every 2 min, every 5 min, etc.) according to their requirement. The system operator 121 has the ability to also configure how frequently a client user wants to restart networking devices 105, configure the public server 106 URL and mapping of Customer, Circuit, networking devices 105 and SPC 102 through the on-site computer 107.

The networking devices 105 are connected to an internet client organization 113 using a second internet link 114. Organization 113 is provided with internet 114 to the organizations' internal working and carry out their operations.

Another purpose of the invention is to keep the SPC 102 flexible to accommodate requirements of various users and organizations. To achieve this, the SPC 102 is accompanied with a cloud infrastructure 114. SPC 102 will periodically import data to the cloud infrastructure 114. SPC 102 will operate on push mechanism to the cloud infrastructure 114.

The sections below will explain the overall working process of cloud infrastructure 114 and its relevant components with SPC 102. The cloud infrastructure 124 is made up of multiple components namely, an API service 116 which is explained in detail below. A communication link 119 which is in between the API service 116 and database 117 and other link is present between database 117 and web application server 118.

During the initial configuration a connection link will be established between the networking devices 105 and the API service 116 so that they can identify each other and set-up a path before exchanging any data. API Service 116 and networking device 105 will use javascript object notation (JSON) for transporting data. The API Service 116 will communicate data from and to networking devices 105 using the internet 115 and stores it in the database 117 using communication link 119. SPC 102 will locally store data in the data storage unit if the internet connection is lost and will resume data transfer when the internet is back.

Additionally, SPC or the power connector strip 102 can be factory reset by sending a command through the web application server 118 from the cloud infrastructure 124, SPC or the power connector strip 102 can reset the real time clock by sending a command through the web application server 118 from the cloud infrastructure 124, SPC's firmware can be updated by the user 121 sending a command through the web application server 118 from the cloud infrastructure 124.

Also, SPC or the power connector strip 102 can be converted to a normal power strip and avoid the logic of the recycle based on internet connectivity, this can be done by the user 121 sending a command through the web application server 118 from the cloud infrastructure 124.

The user or system operator 121, is communicatively connected to the server-computer link 123 or some other network capable of providing data/communications which allows a client end user, such as a system operator 121, to interact with database 117, e.g., the Internet via web application server 118.

The database 117 serves as an integral component to store and retrieve the information relation to networking devices 105 and SPC 102. Web application server 118 which can be accessed by the system operator 121 on the computer 120 to view the status, reports and analytics based on the data sent by SPC 102 stored in the database 117. The database 117 will use MySQL and MongoDB for the database management system. The Web application server 118 can allow system operator 121 to view reported diagnostic data such as failure ping report, power reset report, historic data download, device ID, payload information, etc. The data analytics algorithms on Web application server 118 will forecast the trend of ping failures and power cycles and it would be visible on the web application on the third computational unit or computer 120 to be viewed. The web application server 118 will use HTTP and HTTPS protocol for data transfer.

Moreover, SPC or the power connector strip 102, can send diagnosis data to the cloud infrastructure 124 when asked by the user 121 by sending a command through the web application server 118 from the cloud infrastructure. Below are the details of the diagnosis data:
∘ SD card status - This shows the status of the SD Card. If the SD Card is inserted in the power connector strip 102, then "Present" will be shown on the web application server 118, else it will show "Absent".
∘ SD card memory status - This shows the status of the SD Card memory. If the SD card is full, then "Full" will be shown on the web application server 118, else it will show "Available".
∘ SD Card Corrupt Status - This shows the status of SD Card state. If the SD Card is not readable by the firmware of the power connector strip 102 then "Corrupted" will be shown on the web application server 118, else it will show "Not Corrupted".
∘ SD card read status
∘ SD card size - This shows the size of the SD Card, e.g., 256 MB on the web application server 118.
∘ EEPROM initialization status - EEPROM stands for Electrically Erasable Programmable Read-Only Memory. Shows the status of the Initialization of EPROM which is an internal memory of the power connector strip 102. If it is initialized without an issue, then "Success" will be shown on the web application server 118, else it will show "Fail".
∘ MAC Readability - This shows if the MAC Address of the power connector strip 102 is read successfully. If the MAC Address is read, then "Success" will be shown on the web application server 118, else it will show "Fail".
∘ RTC battery power status - This shows the RTC (Real-Time Clock) Battery (which is an internal part of the power connector strip 102) Power Status. If RTC battery power is good, then "Power OK" will be shown on the web application server 118, else it will show "Power Fail".
∘ RTC battery failure reason - This shows the reason for RTC battery power failure which will come from the RTC firmware.
o Switch status
o Action taken on switch press
o Ethernet cable - This shows if the ethernet cable is connected or not to the power connector strip 102. If the ethernet cable is connected, then "Connected" will be shown on the web application server 118, else it will show "Not connected".
∘ Data last fetched at - Datetime when this diagnosis data was sent to the cloud by the power connector strip 102 and when requested from the web application server 118, whichever is most recent.
∘ SPC Device Temperature - SPC device (or power connector strip 102) temperature e.g., 30 degree Celsius.

### DEFINITIONS

As used throughout this patent application, the expression "ping" or "to ping" is used in the sense of a test and verification if a particular destination IP (Internet Protocol) address exists and can accept requests in computer network administration.

As used throughout this patent application, the expression "or" is used in the inclusive sense instead of the exclusive sense, unless the exclusive sense is clearly defined in a specific situation. In this context, a sentence of the type "X uses A or B" must be interpreted as including all the pertinent inclusive combinations, for example "X uses A", "X uses B" and "X uses A and B".

As used throughout this patent application, the indefinite article "a", "an" or "one" must be interpreted generally as "one or more", unless the sense of a singular embodiment is clearly defined in a specific situation.

As presented in this specification, the expressions listed with examples must be interpreted with the purpose of illustrating an example and not indicating a preference.

The subject matter described above is provided as an illustration of the present invention and must not be interpreted so as to limit it. The terminology used with the purpose of describing specific embodiments, according to the present invention, must not be interpreted to limit the invention. As used in the specification, the definite and indefinite articles, in their singular form, aim at the interpretation of also including the plural forms, unless the context of the description indicates, explicitly, the contrary. It will be understood that the expressions "comprise" and "include", when used in this description, specify the presence of the characteristics, the elements, the components, the steps, and the related operations, however, they do not exclude the possibility of other characteristics, elements, components, steps, and operations also being contemplated.

All the alterations, providing that they do not modify the essential characteristics of the claims that follow, must be considered as being within the scope of protection of the present invention.

### LIST OF REFERENCE INDICATIONS

- 100: System for checking internet connectivity
- 101: Power source like UPS or electric board
- 102: SPC (Smart Power Connector) / power connector strip
- 103: Power sockets
- 104: LAN ports
- 105: Networking devices (Network Access Points and Internet Service Provider)
- 106: Public server
- 107: On-site Computer
- 108: Power chord
- 109: Power connection
- 110: first communication link
- 111: Hard wired connection
- 112: first Internet link
- 113: Organization
- 114: second Internet link
- 115: third Internet link
- 116: application programming interface service (API Service)
- 117: Database
- 118: Web application server
- 119: second communication link
- 120: End user computer
- 121: System operator
- 123: Server link

| | |
|---|---|
| 124 | Cloud Infrastructure |

### LIST OF CITATIONS

### PATENT LITERATURE

US Patent No.: US 10,838473 B2 published on 30th January, 2020, by International Business Machines Corporation, Armonk, NY (US).

## Claims

1. A power connector strip (102) comprising:
- at least two identical power sockets (103);
- a power chord (108);
**characterized in that** the power connector strip further comprises:
- at least two local area network ports (104);
- a programmable control unit, comprising an internal real time clock;
- a data storage unit;
- an internal thermometer;
and wherein the programmable control unit is configured to be programmable by a computational unit through one of the local area network ports (104) and the programmable control unit is configured to check internet connectivity of any devices connected thereto in at least one of said at least two identical power sockets (103).

2. A system for checking internet connectivity (100) **characterized in that** the system comprises:
- a power connector strip (102) as defined in the preceding claim, wherein the power connector strip (102) is connected to a power source (101);
- an on-site computer (107) comprising a user interface for a user (121), connected to the power connector strip (102) through one of the local area network ports (104) and via a first communication link (110);
- one or more networking devices (105) plugged into one or more of the at least two identical power sockets (103) via one or more power connections (109), and when two or more, they are connected to each other via a wired connection (111);
- a public server (106) where to at least one of the one or more networking devices (105) are connected via an first internet link (112);
- an internet client organization (113) connected to one of the networking devices (105) via a second internet link (114);
- a cloud infrastructure (124) comprising:
- an application programming interface service (116) connected to one of the networking devices (105) via a third internet link (115);
- a database (117) connected to the application programming interface service (116) via a second communication link (119);
- a web application server (118) connected to the database (117) via another second communication link (119);
- an end user computer (120) having an end user interface and being connected to the web application server (118) via a server link (123).

3. A computer-implemented method for checking internet connectivity, implemented by the system as defined in the preceding claim, **characterized in that** the method comprises the following steps:
a) initial configuration, by a user (121), through the on-site computer (107), of the following parameters in the programmable control unit comprised in the power connector trip (102) as defined in claim 1:
- a time interval ti to send a ping command to the public server (106);
- an X number of failed pings above which the programmable control unit will power cycle the at least two identical power sockets (103) comprised in the programmable control unit;
- a time duration between two power cycles td;
- the frequency of restart of the one or more networking devices (105);
wherein during this initial configuration the following substeps are carried out: a connection link is established between the networking devices (105) and the application programming interface service (116) for identification and setting-up an exchanging data path, the application programming interface service (116) and networking device (105) will use javascript object notation, and the application programming interface service (116) will communicate data from and to networking devices (105) using the third internet link (115) and stores it in the database (117) using communication link (119);
b) start counting the time, by the internal real time clock of the programmable control unit comprised in the power connector strip (102);
c) when the time interval ti is reached, sending of a ping command, by the power connector strip (102), to the public server (106) for checking internet connectivity, and sets the time interval ti counting to zero;
d) if the ping command resulted fail, the programmable control unit comprised in the power connector strip (102) counts y=p+1, wherein p equals the number of previous failures in the same ping cycle, and the programmable control unit stores in the storage unit comprised in the power connector strip (102), the data related to y;
e) when y=X, the programmable control unit checks if the time lapsed tl over the last command of power cycle sent to the at least two identical power sockets (103) is greater than td;
f) if tl is greater than td, the programmable control unit comprised in the power connector strip (102), sends a power cycle command to the at least two identical power sockets (103) and the programmable control unit stores in the storage unit comprised in the power connector strip (102), the data related to the current power cycle command and sets y=0;
g) the programmable control unit comprised in the power connector strip (102), sends the data stored in the storage unit comprised in the power connector strip (102) to the database (117) comprised in the cloud structure (124), and said data will be stored in the database (117);
h) the web application server (118) executes data analytics algorithms to forecast the trend of ping command failures and power cycles run by the power connector strip (102), sending the forecast result to the end user computer (120);
h1) the web application server (118) executes diagnostic data, and send diagnosis data to the cloud infrastructure (124) when asked by the user (121) through a command via the web application server (118) from the cloud infrastructure (124);
wherein
steps b) to f) are executed in a cyclic manner, repeatedly and sequentially; and any other step is executed one or more times.

4. The computer-implemented method according to the preceding claim, **characterized in that** the method further comprises the following step:
i) a web application on the user interface of the end user computer (120) displays the results of steps g) and h) to a user (121).

5. The computer-implemented method according to any one of claims 3-4, **characterized in that** the method further comprises the following step:
j) the power connector strip (102) captures the internet protocol address after a successful dynamic host configuration protocol connection and sends it to the cloud infrastructure (124), which causes said internet protocol address to be displayed on the user interface of the end user computer (120).

6. The computer-implemented method according to any one of claims 3-5, **characterized in that** the power cycle command of step f) is carried out by the user (121) sending a command through the web application server (118) and sets y=0.

7. The computer-implemented method according to any one of claims 3-6, **characterized in that** the method further comprises at least one of the following steps:
k) the power connector strip (102) is factory reset by a command sent by the user (121) through the web application server (118) from the cloud infrastructure (124);
l) the power connector strip (102) resets the internal real time clock by a command sent by the user (121) through the web application server (118) from the cloud infrastructure (124);
m) the power connector strip (102) firmware can be updated by the user (121) by sending a command through the web application server (118) from the cloud infrastructure (124); and
n) the memory storage unit is formatted by a command sent by the user (121) through the web application server (118) from the cloud infrastructure (124).

8. The computer-implemented method according to any one of claims 3-7, **characterized in that** the method further comprises the following steps:
o) the user 121 sends a command through the web application server 118 from the cloud infrastructure to the power connector strip 102, requesting diagnosis data;
p) the power connector strip 102 sends diagnosis data to the cloud infrastructure 124; wherein the diagnosis data comprises at least one of the group consisting of: a memory storage unit status, a memory storage unit corruption status, a memory storage unit size, an internal memory initialization status, an internal clock battery power status, an internal clock battery failure reason, an ethernet cable connection status, an internal temperature.

9. A computer program **characterized in that** it comprises instructions which, when the program is executed by a computer, cause the computer to carry out the method of any one of claims 3-8.

10. A computer-readable medium **characterized in that** it comprises instructions which, when executed by a computer, cause the computer to carry out the method of any one of claims 3-8.
